# EUROPEAN PATENT APPLICATION

(11) **EP 1 515 498 A1**
(43) Date of publication of application: **16.03.2005**
(21) Application number: 04254820.6
(22) Date of filing: 10.08.2004
(51) Int. Cl.: H04L 12/56

(54) **Congestion management in telecommunications networks**

(30) Priority: 15.09.2003 US 662728
(71) Applicant: Avaya Technology Corp., Basking Ridge, New Jersey 07920-2332 (US)
(72) Inventor: Garg, Sachin, Green Brook New Jersey 08812 (US); Kappes, Martin, Bridgewater New Jersey 08807 (US)
(74) Representative: McCallum, Graeme David

(57) **Abstract**

A technique for lessening the likelihood of congestion in a congestible node is disclosed. In the illustrative embodiment, the proxy node resides in the path of the protocol data units en route to a congestible node and the proxy node decides whether to drop protocol data units *en route* to the congestible node. In some embodiments of the present invention, the proxy node comprises a larger queue for the protocol data units than does the congestible node. The illustrative embodiment of the present invention is useful because it enables the manufacture of "lightweight" nodes without large queues and without the horsepower needed to run an algorithm, such as the Random Early Detection algorithm, for deciding which protocol data units to drop. Furthermore, the illustrative embodiment is useful because it can lessen the likelihood of congestion in legacy nodes.

## Description

The present invention relates to telecommunications in general, and, more particularly, to congestion management in telecommunications networks.

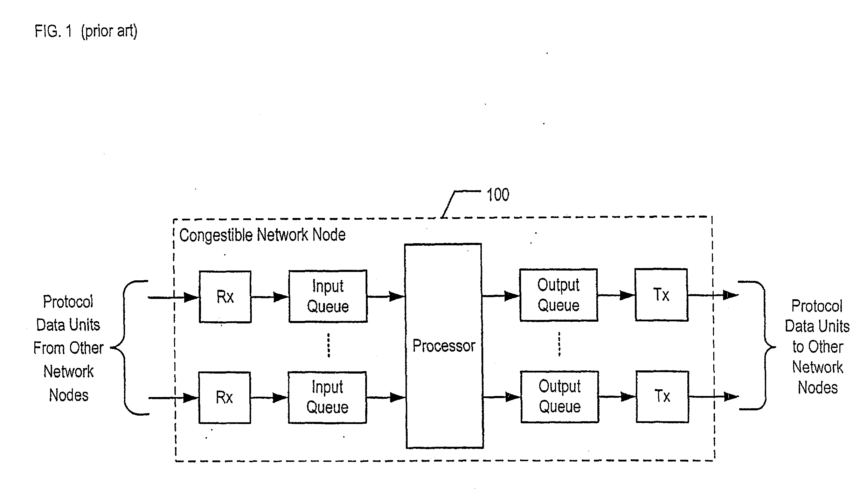

In a store-and-forward telecommunications network, each network node passes protocol data units to the next node, in bucket-brigade fashion, until the protocol data units arrive at their final destination. A network node can have a variety of names (*e.g*. "switch," "router," "access point," *etc*.) and can perform a variety of functions, but it always has the ability to receive a protocol data unit on one input link and transmit it on one or more output links. Figure 1 depicts a block diagram of the salient components of a typical network node in the prior art.

For the purposes of this specification, a "protocol data unit" is defined as the data object that is exchanged by entities. Typically, a protocol data unit exists at a layer of a multi-layered communication protocol and is exchanged across one or more network nodes. A "frame," a "packet," and a "datagram" are typical protocol data units.

In some cases, a protocol data unit might spend a relatively brief time in a network node before it is processed and transmitted on an output link. In other cases, a protocol data unit might spend a long time.

One reason why a protocol data unit might spend a long time in a network node is because the output link on which the protocol data unit is to be transmitted is temporarily unavailable. Another reason why a protocol data unit might spend a long time in a network node is because a large number of protocol data units arrive at the node faster than the node can process and output them.

Under conditions such as these, a network node typically stores or "queues" a protocol data unit until it is transmitted. Sometimes, the protocol data units are stored in an "input queue" and sometimes the protocol data units are stored in an "output queue." An input queue might be employed when protocol data units arrive at the network node (in the short run) more quickly than they can be processed. An output queue might be employed when protocol data units arrive and are processed (in the short run) more quickly than they can be transmitted on the output link.

A queue has a finite capacity, and, therefore, it can fill up with protocol data units. When a queue is filled, the attempted addition of protocol data units to the queue causes the queue to "overflow" with the result that the newly arrived protocol data units are discarded or "dropped." Dropped protocol units are forever lost and do not leave the network node.

A network node that comprises a queue that is dropping protocol data units is called "congested." For the purposes of this specification, a "congestible node" is defined as a network node (*e.g.* a switch, router, access point, *etc*.) that is susceptible to dropping protocol data units.

The loss of a protocol data unit has a negative impact on the intended end user of the protocol data unit, but the loss of any one protocol data unit does not have the same degree of impact as every other protocol data unit. In other words, the loss of some protocol data units is more injurious than the loss of some other protocol data units.

When a node is congested, or close to becoming congested, it can be prudent for the node to intentionally and proactively drop one or more protocol data units whose loss will be less consequential than to allow arriving protocol data units to overflow and be dropped and whose loss might be more consequential. To accomplish this, the node can employ an algorithm to intelligently identify:
(1) which protocol data units to drop,
(2) how many protocol data units to drop, and
(3) when to drop those protocol data units,
in order to:
(a) reduce injury to the affected communications, and
(b) lessen the likelihood of congestion in the congestible node.

One example of an algorithm to mitigate congestion in congestible nodes is the well-known Random Early Detection algorithm, which is also known as the Random Early Discard Algorithm.

Some legacy nodes, however, were not designed to intentionally drop a protocol data unit and it is often technically or economically difficult to retrofit them to add that functionality. Furthermore, it can be prohibitively expensive to build nodes that have the computing horsepower needed to run an algorithm such as Random Early Discard or Random Early Detection.

Therefore, the need exists for a new technique for ameliorating the congestion in network nodes without some of the costs and disadvantages associated with techniques in the prior art.

The present invention is a technique for lessening the likelihood of congestion in a congestible node without some of the costs and disadvantages for doing so in the prior art. In accordance with the illustrative embodiments of the present invention, one node - a proxy node - drops protocol data units to lessen the likelihood of congestion in the congestible node.

In the illustrative embodiment, the proxy node resides in the path of the protocol data units en route to a congestible node and the proxy node decides whether to drop protocol data units *en route* to the congestible node. In some embodiments of the present invention, the proxy node comprises a larger queue for the protocol data units than does the congestible node.

The illustrative embodiment of the present invention is useful because it enables the manufacture of "lightweight" nodes without large queues and without the horsepower needed to run an algorithm, such as Random Early Discard or Random Early Detection, for deciding which protocol data units to drop. Furthermore, the illustrative embodiment is useful because it can lessen the likelihood of congestion in legacy nodes.

An illustrative embodiment of the present invention comprises: maintaining at a protocol-data-unit excisor a first queue of protocol data units en route to a first congestible device; receiving at the protocol-data-unit excisor a flow control signal that indicates whether the first congestible device is ready to receive one or more of the protocol data units from the first queue; and selectively dropping, at the protocol-data-unit excisor, one or more of the protocol data units based on a first metric of the first queue.
Figure 1 depicts a block diagram of the salient components of a typical network node in the prior art.
Figure 2 depicts a block diagram of the illustrative embodiment of the present invention.
Figure 3 depicts a block diagram of the salient components of a switch and protocol-data-unit excisor in accordance with the illustrative embodiment of the present invention.
Figure 4 depicts a block diagram of the salient components of a protocol-data-unit excisor in accordance with the illustrative embodiment of the present invention.
Figure 5 depicts a flow chart of the salient tasks performed by the illustrative embodiment of the present invention.
Figure 6 depicts a flow chart of the subtasks comprising task 501 depicted in Figure 5.
Figure 7 depicts a flow chart of the subtasks comprising task 503 depicted in Figure 5.

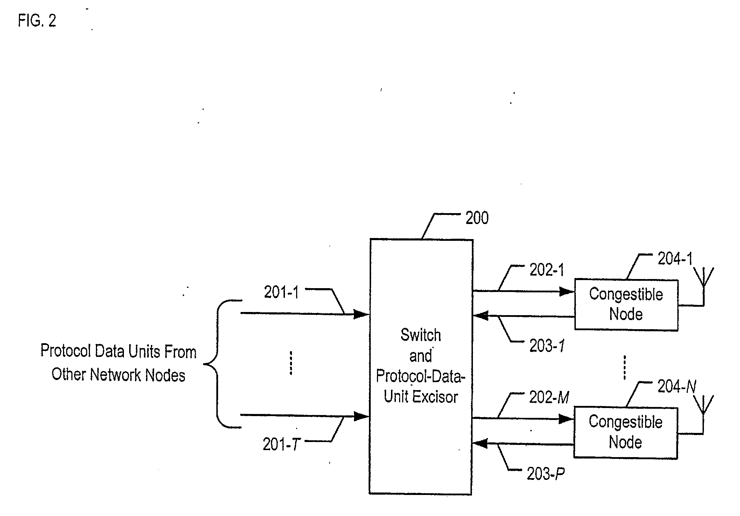

Figure 2 depicts a block diagram of the illustrative embodiment of the present invention, which is switch and protocol-data-unit excisor 200. Switch and protocol-data-unit excisor 200 comprises inputs 201-1 through 201-*T*, outputs 202-1 through 202-*M*, inputs 203-1 through 203-*P*, and congestible nodes 204-1 through 204-*N*, wherein *M, N, P,* and *T* are each positive integers.

Switch and protocol-data-unit excisor 200 has two principal functions. First, it switches protocol data units from each of inputs 201-1 through 201-*T* to one or more of outputs 202-1 through 202-*M*, and second it selectively drops protocol data units to ameliorate congestion in one or more of congestible nodes 204-1 through 204-*N*. In other words, some protocol data units enter switch and protocol-data-unit excisor 200 but do not leave it.

In accordance with the illustrative embodiment of the present invention, both functions are performed by one mechanically-integrated node. It will be clear to those skilled in the art, however, after reading this specification, how to make and use embodiments of the present invention that perform the two functions in a plurality of non-mechanically-integrated nodes.

Each of inputs 201-1 through 201-T represents a logical or physical link on which protocol data units flow into switch and protocol-data-unit excisor 200.

Each link represented by one of inputs 201-1 through 201-*T* can be implemented in a variety of ways. For example, in some embodiments of the present invention such a link can be realized as a separate physical link. In other embodiments such a link can be realized as a logical channel on a multiplexed line. It will be clear to those skilled in the art, after reading this specification, how to implement the links represented by each of inputs 201-1 through 201-*T*.

Each of outputs 202-1 through 202-*M* represents a logical or physical link on which protocol data units flow from switch and protocol-data-unit excisor 200 toward a congestible node.

Each link represented by one of outputs 202-1 through 202-*M* can be implemented in a variety of ways. For example, in some embodiments of the present invention such a link can be realized as a separate physical link. In other embodiments such a link can be realized as a logical channel on a multiplexed line. It will be clear to those skilled in the art, after reading this specification, how to implement the links represented by each of outputs 202-1 through 202-*M*.

Each of inputs 203-1 through 203-*P* represents a logical or physical link on which a flow control signal arrives at switch and protocol-data-unit excisor 200. The flow control signal indicates whether a congestible device is ready to receive one or more protocol data units from switch and protocol-data-unit excisor 200.

It will be clear to those skilled in the art how to enable a congestible device to signal switch and protocol-data-unit excisor 200 that it is ready to receive one or more protocol data units. For example, one method for implementing the flow control signal is to use back-pressure flow control, and another is to use the Pause frame procedure of IEEE 802.3. In any case, it will be clear to those skilled in the art how to enable congestible nodes 204-1 through 204-N and switch and protocol-data-unit excisor 200 to be capable of indicating through flow control when each congestible device is ready to receive one or more protocol data units.

Each link represented by one of inputs 203-1 through 203-*P* can be implemented in a variety of ways. For example, in some embodiments of the present invention such a link can be realized as a separate physical link. In other embodiments such a link can be realized as a logical channel on a multiplexed line, or as an Internet Protocol address to which datagrams carrying the flow control signals are directed. It will be clear to those skilled in the art, after reading this specification, how to implement the links represented by each of inputs 203-1 through 203-*P*.

In accordance with the illustrative embodiment, each of congestible nodes 204-1 through 204-*N* is an access point in a wireless area network. In some alternative embodiments of the present invention, however, some or all of congestible nodes 204-1 through 204-*N* are switches, routers, or bridges. In any case, it will be clear to those skilled in the art how to make and use each of congestible nodes 204-1 through 204-*N*.

In accordance with the illustrative embodiment, *M* = *N* = *P*. It will be clear to those skilled in the art, however, after reading this specification, how to make and use alternative embodiments of the present invention in which:
i. *M ≠ N* (because, for example, one or more congestible nodes accepts more than one of outputs 202-1 through 202-*M*), or
ii. *M ≠ P* (because, for example, one or more of outputs 202-1 through 202-*M* feeds more than one queue), or
iii. *N ≠ P* (because, for example, one or more congestible nodes generates more than one flow control signal), or
iv. any combination of i, ii, and iii.

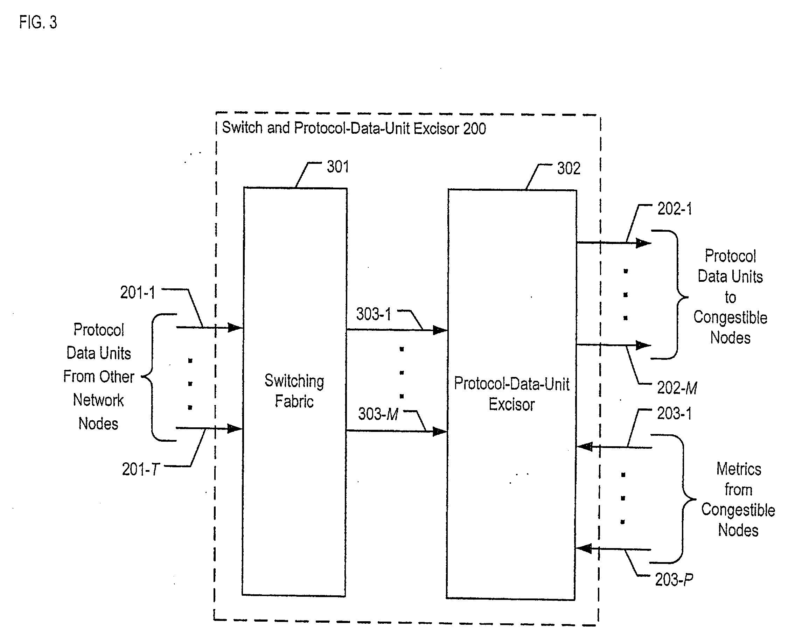

Figure 3 depicts a block diagram of the salient components of switch and protocol-data-unit excisor 200. Switch and protocol-data-unit excisor 200 comprises: switching fabric 301, protocol-data-unit excisor 302, links 303-1 through 303-*M*, inputs 201-1 through 201-*T*, outputs 202-1 through 202-*M*, and inputs 203-1 through 203-*P*, interconnected as shown.
Switching fabric 301 accepts protocol data units on each of inputs 201-1 through 201-*T* and switches them to one or more of links 303-1 through 303-*M*, in well-known fashion. It will be clear to those skilled in the art how to make and use switching fabric 301.

Each of links 303-1 through 303-*M* carries protocol data units from switching fabric 301 to protocol-data-unit excisor 302. Each of links 303-1 through 303-*M* can be implemented in various ways, for example as a distinct physical channel or as a logical channel on a multiplexed medium, such as a time-multiplexed bus. In the illustrative embodiment of the present invention, each of links 303-1 through 303-*M* corresponds to one of outputs 202-1 through 202-*M*, such that a protocol data unit arriving at protocol-data-unit excisor 302 on link 303-*m* (wherein *m* is a member of the set of positive integers {1, .... , *M*}) exits protocol-data-unit excisor 302 on output 202-*m*, unless it is *dropped* within protocol-data-unit excisor 302.

In Figure 3, switching fabric 301 and protocol-data-unit excisor 302 are depicted as distinct entities, but it will be clear to those skilled in the art, after reading this specification, how to make and use alternative embodiments of the present invention in which the two entities are fabricated as one.

Furthermore, switching fabric 301 and protocol-data-unit excisor 302 are depicted in Figure 3 as being within a single integrated housing. It will be clear to those skilled in the art, however, after reading this specification, how to make and use embodiments of the present invention in which switching fabric 301 and protocol-data-unit excisor 302 are manufactured and sold separately, perhaps even by different enterprises.

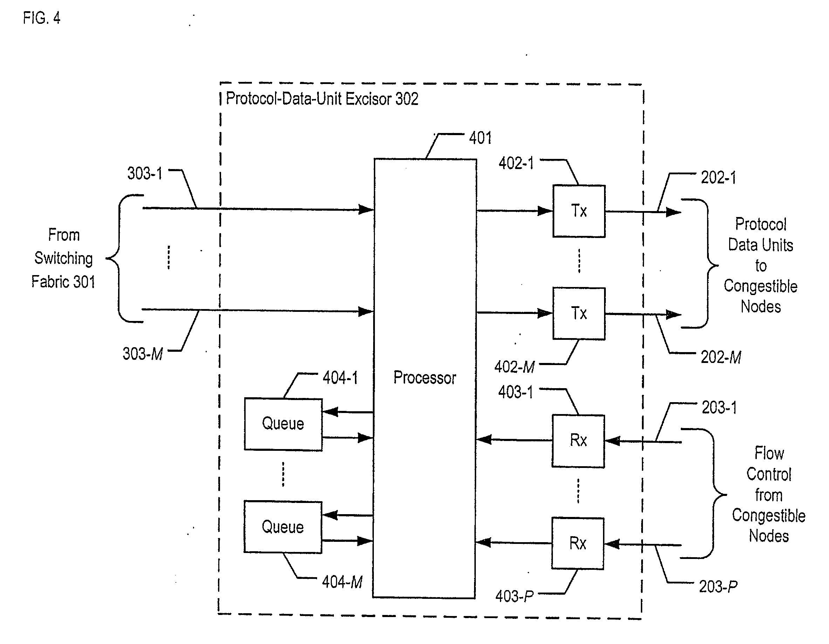

Figure 4 depicts a block diagram of the salient components of protocol-data-unit-excisor 302 in accordance with the illustrative embodiment of the present invention. Protocol-data-unit excisor 302 comprises processor 401, transmitters 402-1 through 402-*M*, receivers 403-1 through 403-*P*, and queues 404-1 through 404-*M*, interconnected as shown.

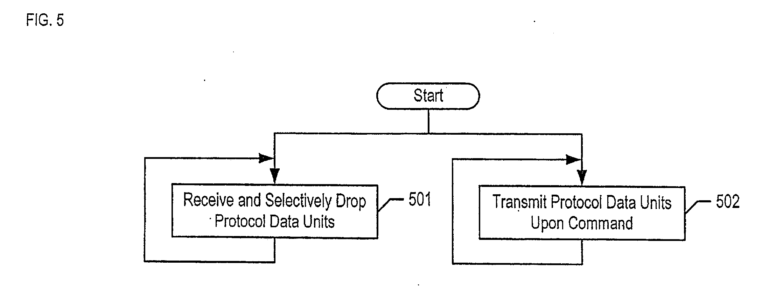

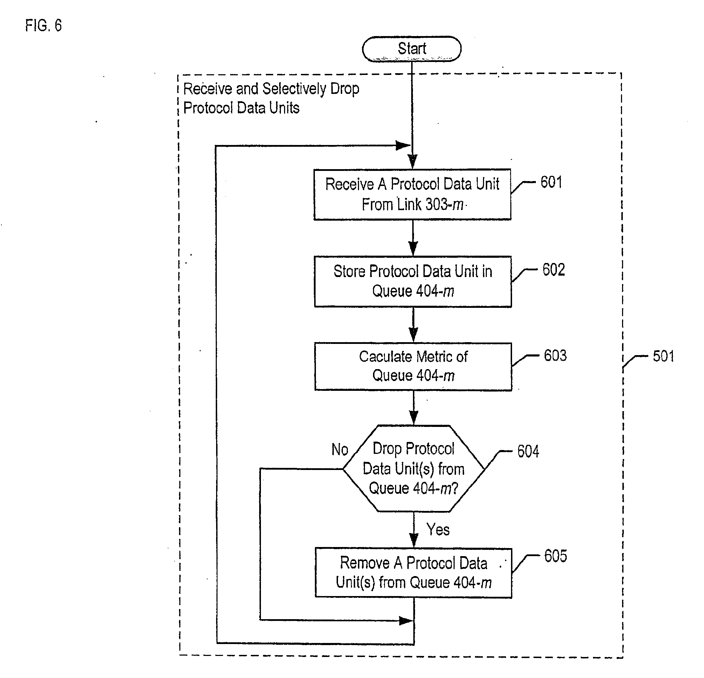

Processor 401 is a general-purpose processor that is capable of performing the functionality described below and with respect to Figures 5 and 6. In some alternative embodiments of the present invention, processor 401 is a special-purpose processor. In either case, it will be clear to those skilled in the art, after reading this specification, how to make and use processor 401.

Transmitter 402-*m* accepts a protocol data unit from processor 401 and transmits it on output 202-*m*, in well-known fashion, depending on the physical and logical protocol for output 202-*m*. It will be clear to those skilled in the art how to make and use each of transmitters 402-1 through 402-*M*.

Receiver 403-*p* (wherein *p* is a member of the set of positive integers {1, ...., *P*}) receives a flow control signal on input 203-*p*, in well-known fashion, and passes the metric to processor 401. It will be clear to those skilled in the art how to make and use receivers 403-1 through 403-*P*.

Queue 404-*m* is a first-in-first-out queue that accepts a protocol data unit from link 303-*m* and stores it until the protocol data unit is either: (i) forwarded to a congestible node, on lead 202-*m*, or (ii) erased (*i*.*e*., intentionally dropped as described in detail below) by processor 401. Queue 404-*m* is constructed so that processor 401 can examine each protocol data unit as it arrives and also that processor 401 can erase any given protocol data unit in queue 404-*m* at any time. It will be clear to those skilled in the art, after reading this specification, how to make and use protocol-data-unit excisor 302.

In order to mitigate the occurrence of congestion at the congestible nodes, protocol-data-unit excisor 302 selectively drops protocol data units which are *en route* to a queue in a congestible node.

Figure 5 depicts a flowchart of the salient tasks performed by protocol-data-unit excisor 200 in accordance with the illustrative embodiment of the present invention. Tasks 501 and 502 run continuously, concurrently, and asynchronously. It will be clear to those skilled in the art, after reading this specification, how to make and use embodiments of the present invention in which tasks 501 and 502 do not run continuously, concurrently, or asynchronously.

At task 501, protocol-data-unit excisor 302 periodically or sporadically receives a protocol data unit and selectively decides whether or not to drop it. The details of task 501 are described in detail below and with respect to Figure 6.

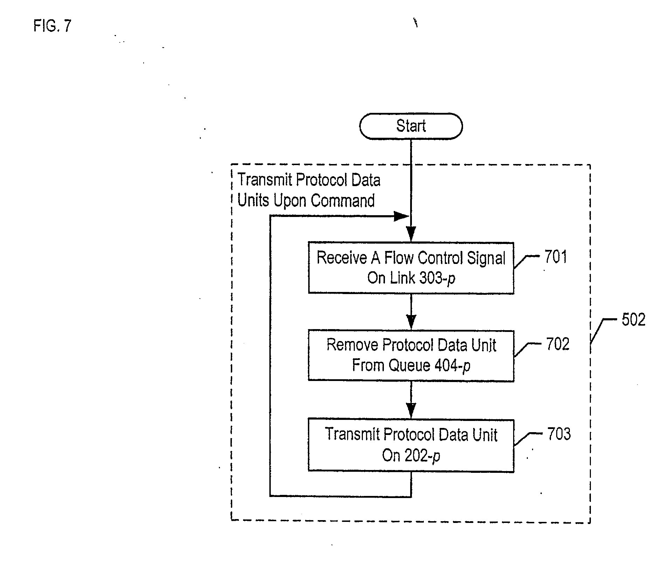

At task 502, protocol-data-unit excisor 302 periodically or sporadically transmits a protocol data unit to a congestible device upon receiving a flow control signal that the congestible device is ready to receive a protocol data unit. The details of task 502 are described in detail below and with respect to Figure 7.

Figure 6 depicts a flow chart of the salient subtasks comprising task 501, as shown in Figure 5.

At subtask 601, processor 401 receives a protocol data unit on link 303-*m*, which is *en route* to output 202-*m*. It will be clear to those skilled in the art how to enable processor 401 to perform subtask 601.

At subtask 602, processor 401 stores the protocol data unit received in subtask 601 in queue 404-*m*. It will be clear to those skilled in the art how to enable processor 401 to perform subtask 602.

At subtask 603, processor 401 calculates the metric for queue 404-m based on the properties of all of the protocol data units in queue 404-*m* (which includes the protocol data unit received in subtask 601). It will be clear to those skilled in the art how to enable processor 401 to perform subtask 603.

A metric of a queue represents information about the status of the queue. In some embodiments of the present invention, a metric can indicate the status of a queue at one moment (*e.g*., the current length of the queue, the greatest sojourn time of a protocol data unit in the queue, *etc*.). In some alternative embodiments of the present invention, a metric can indicate the status of a queue during a time interval (*e*.*g*., an average queue length, the average sojourn time of a protocol data unit in the queue, *etc*.). It will be clear to those skilled in the art how to formulate these and other metrics of a queue.

At subtask 604, processor 401 decides whether to drop on or more protocol data units in queue 404-*m*, and, if so, identifies them. It will be clear to those skilled in the art how to enable processor 401 to perform subtask 604. When processor 401 decides at task 602 to drop a protocol data unit, control passes to subtask 605; otherwise control passes to task 601 to await the arrival of the next protocol data unit.

In the illustrative embodiment of the present invention, protocol-data-unit excisor 302 decides whether to drop a protocol data unit *en route* to congestible node 204-*n* (wherein *n* is a member of the set of positive integers {1, ...., *N*}) by performing an instance of Random Early Detection using a metric of queue 404-*m* as a Random Early Detection parameter.

The metric calculated in subtask 603 enables protocol-data-unit excisor 302 to estimate the status of the queue fed by output 202-*m* and the Random Early Detection algorithm enables protocol-data-unit excisor 200 to select which protocol data units to drop. The loss of a protocol data unit has a negative impact on the intended end user of the protocol data unit, but the loss of any one protocol data unit does not have the same degree of impact as every other protocol data unit. In other words, the loss of some protocol data units is more injurious than the loss of some other protocol data units.

As is well known to those skilled in the art, some embodiments of the Random Early Detection algorithm intelligently identify:
(1) which protocol data units to drop,
(2) how many protocol data units to drop, and
(3) when to drop those protocol data units,
in order to:
(a) reduce injury to the affected communications, and
(b) lessen the likelihood of congestion in a congestible node.

It will be clear to those skilled in the art how to make and use embodiments of the present invention that use a species of the Random Early Detection algorithm.

In some alternative embodiments of the present invention, protocol-data-unit excisor 302 uses a different algorithm for selecting which protocol data units to drop. For example, protocol-data-unit excisor 302 can drop all of the protocol data units it receives on a given link when the metric associated with that link is above a threshold. In any case, it will be clear to those skilled in the art, after reading this specification, how to make and use embodiments of the present invention that use other algorithms for deciding which protocol data units to drop, how many protocol data units to drop, and when to drop those protocol data units.

At subtask 605, processor 401 deletes the protocol data unit or units identified in subtask 604 from queue 404-*m*.
Figure 7 depicts a flow chart of the salient subtasks comprising task 502, as shown in Figure 5.

At subtask 701, processor 401 receives a flow control signal on link 203-*p*, which indicates that the congestible device that generated the signal desires a protocol data unit to be transmitted on output 202-*p*.

It will be clear to those skilled in the art how to enable processor 401 to perform subtask 701.

At subtask 702, processor 401 removes a protocol data unit from queue 404-*m.* It will be clear to those skilled in the art how to enable processor 401 to perform subtask 702.

At subtask 703, processor 401 transmits the protocol data unit removed in subtask 702 on output 202-*p*. It will be clear to those skilled in the art how to enable processor 401 to perform subtask 703.

It is to be understood that the above-described embodiments are merely illustrative of the present invention and that many variations of the above-described embodiments can be devised by those skilled in the art without departing from the scope of the invention. It is therefore intended that such variations be included within the scope of the following claims and their equivalents.

## Claims

1. A method comprising:
maintaining at a protocol-data-unit excisor a first queue of protocol data units en route to a first congestible device;
receiving at said protocol-data-unit excisor a flow control signal that indicates whether said first congestible device is ready to receive one or more of said protocol data units from said first queue; and
selectively dropping, at said protocol-data-unit excisor, one or more of said protocol data units based on a first metric of said first queue.

2. The method of claim 1 wherein said protocol-data-unit excisor decides whether to drop a protocol data unit based on Random Early Detection.

3. The method of claim 1 wherein said indication is conveyed using back-pressure flow control.

4. The method of claim 1 wherein said indication is conveyed using the Pause frame procedure of IEEE 802.3.

5. The method of claim 1 further comprising:
maintaining at said protocol-data-unit excisor a second queue of protocol data units en route to a second congestible device;
receiving at said protocol-data-unit excisor a flow control signal that indicates whether said second congestible device is ready to receive one or more of said protocol data units from said second queue; and
selectively dropping, at said protocol-data-unit excisor, one or more of said protocol data units based on a second metric of said second queue.

6. A protocol-data-unit excisor comprising:
a first queue for storing one or more protocol data units en route to a first congestible device;
a first receiver for receiving a flow control signal that indicates whether said first congestible device is ready to receive one or more of said protocol data units from said first queue; and
a processor for selectively dropping one or more of said protocol data units based on a metric of said first queue.

7. The protocol-data-unit excisor of claim 6 wherein said indication is conveyed using back-pressure flow control.

8. The protocol-data-unit excisor of claim 6 wherein said indication is conveyed using the Pause frame procedure of IEEE 802.3.

9. The protocol-data-unit excisor of claim 6 wherein said protocol-data-unit excisor decides whether to drop a protocol data unit based on Random Early Detection.

10. The protocol-data-unit excisor of claim 6 further comprising:
a second queue for storing one or more protocol data units en route to a second congestible device; and
a second receiver for receiving a flow control signal that indicates whether said second congestible device is ready to receive one or more of said protocol data units from said second queue;
wherein said processor is also for selectively dropping one or more of said protocol data units based on a metric of said second queue.
